# EUROPEAN PATENT SPECIFICATION

(11) **EP 3 798 260 B1**
(45) Date of publication and mention of the grant of the patent: **02.12.2026**
(21) Application number: 19200049.5
(22) Date of filing: 27.09.2019
(51) Int. Cl.: C08L 27/12, C08L 27/18, H01B 3/44

(54) **CROSS-LINKABLE FLUOROPOLYMER COMPOSITIONS**
VERNETZBARE FLUORPOLYMERZUSAMMENSETZUNGEN
COMPOSITIONS DE FLUOROPOLYMÈRES RÉTICULABLES

(43) Date of publication of application: 31.03.2021
(73) Proprietor: Tyco Electronics UK Ltd, Wiltshire SN3 5HH (GB)
(72) Inventor: KURUP, Sreeni, Swindon, Wiltshire SN3 5HH (GB); CORREIA, Tiago, Swindon, Wiltshire SN3 5HH (GB); WILKINS, Graham, Swindon, Wiltshire SN3 5HH (GB)
(74) Representative: Grünecker Patent- und Rechtsanwälte PartG mbB

(56) References cited:
- EP-A2- 0 974 979
- WO-A1-2017/139586
- WO-A1-2019/183139
- JP-A- 2015 034 278
- JP-A- H02 216 705
- US-A1- 2008 097 035
- US-A1- 2016 194 491
- US-A1- 2017 066 915
- US-A1- 2018 312 679
- DATABASE CA [online] CHEMICAL ABSTRACTS SERVICE, COLUMBUS, OHIO, US; NAKABASHI, MASANOBU ET AL: "Fluorine-containing elastomer-covered electrically insulating wires", XP002796927, retrieved from STN Database accession no. 1991:64462
- DATABASE CA [online] CHEMICAL ABSTRACTS SERVICE, COLUMBUS, OHIO, US; ABE, MASATOSHI ET AL: "Fluoro resin compositions, melt-kneaded products, their manufacture, electric wires covered therewith, and manufacture of wire covering materials", XP002796928, retrieved from STN Database accession no. 2015:297657

## Description

### FIELD OF INVENTION

The present invention relates to a blend of a fluoroelastomer and a semi-crystalline fluoroplastic which cis crosslinked for excellent heat resistance, chemical resistance and mechanical properties.

### BACKGROUND OF THE INVENTION

Fluoropolymer compositions have been widely used in a variety of applications involving high temperatures and aggressive chemicals, such as heat-shrink products, seals, gaskets, O-rings, hoses and cable jackets in industrial, automotive, aerospace and/or oil well drilling equipment, for example.

Numerous efforts have been made to improve the mechanical properties of fluoropolymer-based materials. For example, US 2002/177664 A1 discloses fluoropolymer compositions, wherein particles of a semicrystalline fluoropolymer latex having a specific average particle size range are embedded in a fluoroelastomer matrix to provide favourable elastic retention properties and a smooth surface in the final product. US 2006/0142491 A1 discloses a processable rubber composition containing particles of a vulcanized fluorocarbon elastomer dispersed in a matrix of a thermoplastic polymeric material. Further fluoropolymer compositions are disclosed in US 2008/0097035 A1, EP 0 974 979 A2, US 2018/0312679 A1, US 2016/194491 A1, WO 2017/139586 A1, US 2017/066915 A1, JP H02 216705 A, JP 2015-034278 A and WO 2019/183139 A1.

In order to advantageously combine the stability and chemical inertness of perfluorinated monomer units with enhanced elastomeric properties, US 7,476,711 B2 proposes melt blending of a perfluoroelastomer and a semi-crystalline copolymer with a particle size greater than 100 nm, adding a curative, and subsequently curing said composition to form a cured article. However, the mechanical properties of the thus obtained articles tend to deteriorate when exposed to high temperatures for prolonged periods of time. Therefore, it would be desirable to provide fluoropolymer compositions which exhibit further improved heat resistance.

In general, crosslinking of fluoroplastics via chemical or radiation crosslinking processes for developing higher temperature rated products such as moulded parts or tubings is challenging, particularly since sufficient compatibility of the initial components must be ensured.

In this context, US 5,409,997 A is specifically concerned with the provision of thermally stable fluoropolymer compositions and discloses a radiation-crosslinkable composition comprising a fluoropolymer of ethylene, tetrafluoroethylene and at least one monomer having at least one polyvalent atom in one or more side chains, as well as a coagent comprising a difunctional compound selected from the group consisting of an acrylate or salt of an acrylic acid and compounds wherein the difunctionality is provided by the presence of vinyl, epoxide, peroxide, or glycidal groups. However, the heat resistance of these fluoropolymer compositions, particularly at long-term exposure to temperatures above 240°C, still leaves room for improvement.

In view of the above, it remains desirable to provide fluoropolymer compositions which enable manufacturing articles which maintain favorable mechanical properties (e.g. tensile strength, elongation properties) when continuously exposed to extreme temperatures, both in the low temperature range (e.g. between -75°C and 0°C) and high temperature range (e.g. higher than 240°C).

### SUMMARY OF THE INVENTION

The present invention solves this problem with the subject matter of the claims as defined herein. Further advantages of the present invention will be further explained in detail in the section below.

According to a first aspect of the present invention as specified in claims 1 to 11, a cross-linked product obtained by subjecting a cross-linkable composition comprising a blend of (a) an elastomeric fluoropolymer and (b) a semi-crystalline fluoroplastic to ionizing radiation at a dose level of from 5 to 100 kGy is provided, wherein the semi-crystalline fluoroplastic is a thermoplastic co-polymer grafted with anhydride functional groups and has a melting point in the range of from 240°C to 340°C. As has been found by the present inventors, said blend provides an improved combination of properties, with the components (a) and (b) being compatible to each other, and may be used for further processing to the final product by moulding or extrusion, for example, and subsequent cross-linking.

In further aspects, the present invention relates to heat-shrinkable articles (according to claim 11) and cable jackets or sealing elements (according to claim 12) comprising the cross-linked product according to the second aspect.

In another aspect, the present invention as specified in claim 13 relates to a process of manufacturing a cross-linked product, comprising the steps of: (i) mixing an elastomeric fluoropolymer and a semi-crystalline fluoroplastic to prepare a crosslinkable composition; (ii) optionally subjecting the crosslinkable composition to a forming step; and (iii) subjecting the crosslinkable composition to ionizing radiation at a dose level of from 5 to 100 kGy to obtain the cross-linked product, wherein the semi-crystalline fluoroplastic is a thermoplastic co-polymer grafted with anhydride functional groups and has a melting point in the range of from 240°C to 340°.

Preferred embodiments of the cross-linked product according to the present invention and other aspects of the present invention are described in the following description and the claims.

### DETAILED DESCRIPTION OF THE INVENTION

For a more complete understanding of the present invention, reference is now made to the following description of the illustrative embodiments thereof:

### Cross-Linked Fluoropolymer Composition

In a first embodiment, the present invention relates to a cross-linked product obtained by subjecting a cross-linkable composition comprising a blend of: (a) an elastomeric fluoropolymer to ionizing radiation at a dose level of from 5 to 100 kGy, and (b) a semi-crystalline fluoroplastic, wherein the semi-crystalline fluoroplastic is a thermoplastic co-polymer grafted with anhydride functional groups and has a melting point in the range of from 240°C to 340°.

The terms "polymer" or "fluoropolymer"/"fluoroplastic", as used herein, generally refer to a polymeric material or fluorine-containing polymeric material having one or more monomer species, including homopolymers, copolymers or terpolymers, for example.

The term "semi-crystalline fluoroplastic" refers to a fluorine-containing polymeric material with detectable crystalline order (by differential scanning calorimetry, x-ray diffraction, density, and other methods), i.e. having areas of crystallinity with amorphous areas existing between the crystalline areas.

In terms of improved mechanical properties, it is preferred that the elastomeric fluoropolymer is not perfluorinated, but only partially fluorinated. More preferably, the elastomeric fluoropolymer is a copolymer comprising copolymerized units of a perfluorinated monomer and a non-fluorinated or partially fluorinated monomer, optionally with one or more additional types of monomers. The elastomeric fluoropolymer used in the present invention preferably contains between 20 to 80 wt.-%, based on the total weight of the elastomeric fluoropolymer, of copolymerized units of perfluorinated monomer and 5 to 80 wt.-% of non-fluorinated or partially fluorinated monomer. Further preferably, the perfluorinated monomer is a perfluoroalkylene, such as hexafluoropropylene (HFP) or tetrafluoroethylene (TFE), for example, of which tetrafluoroethylene (TFE) is particularly preferred. The non-fluorinated or partially fluorinated monomer is preferably selected from partially fluorinated hydrocarbon olefins (such as one or more of vinylidene fluoride, 1,2,3,3,3-pentafluoropropene (1-HPFP), 1,1,3,3,3-pentafluoropropene (2-HPFP), and vinyl fluoride) and non-fluorinated hydrocarbon olefins (such as ethylene, propylene or isobutylene, for example), the latter being further preferred. As non-fluorinated or partially fluorinated monomer, propylene is especially preferred. As elastomeric fluoropolymer, an alternating co-polymer of tetrafluoroethylene and propylene (TFE/P) is especially preferred. Commercially available examples thereof include, but are not limited to fluoroelastomers selected from the Aflas^{®} 100/150 ranges available from AGC Chemicals Europe and the TBR range by DuPont Performance Elastomers.

The content of elastomeric fluoropolymer is preferably between 10 and 95 wt.-%, more preferably between 15 and 90 wt.-%, and further preferably between 20 and 80 wt.-% based on the total weight of the composition.

In the cross-linkable composition, the semi-crystalline fluoroplastic is a co-polymer, preferably a co-polymer comprising fluoroalkylene and a perfluoroether as main chain monomers. The fluoroalkylene is preferably a perfluoroalkylene, such as hexafluoropropylene (HFP) or tetrafluoroethylene (TFE), for example, of which tetrafluoroethylene (TFE) is particularly preferred. The perfluoroether is not particularly limited and may include perfluoroalkoxy alkanes derived from (per)fluoroalkylvinylethers (PAVE) CF₂-CFOR^{f}, wherein R^{f} is a perfluorinated group with 1 to 6 carbon atoms; or from perfluorooxyalkylvinylethers CF₂-CFOX, wherein X is a C₁-C₁₂-perfluorooxyalkyl having one or more ether groups. The co-monomeric unit -CF₂-CF(OR^{f})-, wherein R^{f} is a perfluorinated group with 1 to 6 carbon atoms, is particularly preferred. Preferred co-monomers include perfluoro(ethyl vinyl ether) (PEVE), perfluoro(propyl vinyl ether) (PPVE) and perfluoro(methyl vinyl ether) (PMVE). Especially preferred melt-fabricable fluoropolymers include co-polymers such as PFA (TFE/PAVE copolymer), TFE/HFP/PAVE copolymer and/or PPVE and MFA (TFE/PMVE/PAVE copolymer wherein the alkyl group of PAVE has at least two carbon atoms). Among semi-crystalline fluoroplastics, thermoplastic fluoropolymers comprising acid anhydride functional groups have been shown to exhibit particularly favourable compatibility with elastic fluoropolymers.

The expression "acid anhydride functional group", as used herein, denotes a residual group having two carboxyl groups in one molecule condensed by dehydration.

Suitable acid anhydride functional groups are pendant groups which may be grafted onto one or more of the aforementioned co-monomers (e.g. by replacing a fluorine substituent) or provided independently as pendant group of a co-monomer, i.e. through copolymerization. Among compounds for grafting onto and thereby becoming part of the semi-crystalline fluoroplastic, maleic acid and maleic anhydride (MAnh) are preferred. Maleic anhydride can be halogen-substituted, e.g., dichloromaleic anhydride and difluoromaleic anhydride. Grafting may be brought about by using a grafting compound comprising a linking group (including, but not limited to an unsaturated or saturated hydrocarbon group which is involved in addition or association of radicals (particularly an organic group having an α,β-unsaturated double bond at its terminal), an amino group or a phenol group which is involved in nucleophilic reaction, a peroxy group or an azo group. Preferred linking groups include a group having a carbon-carbon unsaturated bond. The amount of the grafting compound to be used for grafting is usually from 0.01 to 100 parts by weight, preferably from 0.1 to 20 parts by weight, per 100 parts by weight of the fluorine-containing polymer. In the case of a grafting compound of a polymer type, it may be used in a larger amount (up to about 50 parts by weight). Exemplary grafting methods and optional radical-forming agents used in the grafting process will be known to the skilled artisan and are disclosed in US 5,736,610 A, for example. Commercially available examples of a suitable semi-crystalline fluoroplastics functionalized with acid anhydride functional groups include Fluon^{®} PFA resins available from AGC Chemicals Europe.

From the viewpoint of processability, the melting point of the semi-crystalline fluoroplastic comprising anhydride functional groups is in the range of from 240°C to 340°C, and preferably from 290°C to 320°C.

In addition, it may be preferred that the density of the semi-crystalline fluoroplastic is between 1.5 to 3 g/ml, preferably between 1.9 and 2.4 g/ml.

The cross-linkable composition preferably contains semi-crystalline fluoroplastic in a content of between 5 and 90 wt.-% based on the total weight of the composition, preferably between 10 and 80 wt.-%, and further preferably between 20 and 70 wt.-%.

While not being limited thereto, particularly favourable tensile strength and flexibility characteristics may be achieved by adjusting the weight ratio of elastic fluoropolymer to semi-crystalline fluoroplastic in the blend to the range of from 10 : 1 to 1 : 10, more preferably from 4 : 1 to 1 : 4, further preferably from 3 : 1 to 1 : 3, and especially preferably from 2.5 : 1 to 1 : 2.

The compositions may contain additives commonly used in polymer formulations, such as radiation crosslinking promoters (or so-called prorads); antioxidants; UV-stabilizers; conductive fillers (such as carbon black for imparting electrical conductivity); acid acceptors or scavengers (e.g. zinc oxide); plasticizers, lubricants, and processing aids typically utilized in perfluoroelastomer compounding; and pigments (e.g. titanium dioxide or carbon black). Such additives are typically used in total contents of less than 15 wt.-%, preferably less than 10 wt.-%, based on the total weight of the cross-linkable composition.

As examples of radiation crosslinking promoters, compound having at least two ethylenic double bonds, present as allyl, methallyl, propargyl, acrylyl, or vinyl groups may be mentioned, such as triallyl cyanurate (TAC), triallyl isocyanurate (TAIC), triallyl trimellitate, triallyl trimesate, tetraallyl pyromellitate, diallyl isophthalate, diallyl terephthalate, 1,4-butylene glycol dimethacrylate, trimethylolpropane trimethacrylate (TMPTM), diallyl esters of 1,1,3-trimethyl-5-carboxy-3-(p-carboxyphenyl)indane, diallyl adipate, diallyl phthalate (DAP), pentaerythritol trimethacrylate, glycerol propoxy trimethacrylate, liquid poly(1,2-butadiene), tri-(2-acryloxyethyl)isocyanurate, tri-(2-methacryloxyethyl)isocyanurate, and combinations thereof. Mixtures of crosslinking promoters can be used. Preferably, radiation crosslinking promoters are used in a total amount of up to 8 wt.-%, more preferably in a total amount of up to 5 wt.-% based on the total weight of the cross-linkable composition, such as from 0.05 to 5 wt.-% or from 0.1 to 3 wt.-%.

As exemplary antioxidants, alkylated phenols, organic phosphite or phosphates, alkylidene polyphenols, thio-bis-alkylated phenols and polymerized derivatives thereof; dilauryl thio-dipropionate, dimyristyl thiodipropionate, distearyl thiodipropionate (DSTDP), and combinations thereof may be mentioned. Preferably, the antioxidant(s) is (are) used in a total amount of up to 4 wt.-%, more preferably in a total amount of up to 2 wt.-% based on the total weight of the cross-linkable composition.

Advantageously, adjusting the type and quantity of components of the cross-linkable composition according to the first embodiment allows for a fine-tuning of toughness and flexibility of the blend, which is then ready for further processing (including moulding and/or extrusion, for example). Upon cross-linking, these properties are then stabilized to be maintained even at extreme temperatures.

In this regard, according to the present invention, a cross-linked product is obtained by subjecting the above-described composition to ionizing radiation. As has been set out above, the cross-linked products exhibit excellent tensile strength and flexibility over a wide range of temperatures, both when subjected to sudden temperature changes (e.g. a heat or cold shock) and to prolonged exposure to extreme temperatures.

In general, the radiation used for cross-linking should exhibit a sufficiently high energy to penetrate the thickness of the fluoropolymer being treated and to produce ionization therein. The energy level used is any energy level which penetrates the thickness of the sample being irradiated under the atmospheric conditions employed, typically at least 0.5 MeV, and preferably from 1 to 10 MeV. Suitable radiation sources include, but are not limited to gamma rays, X-rays, alpha particles, electron beams, photon beams or deuteron beams, for example, of which electron beam irradiation is usually preferred. Irradiation may be carried out at room temperature or at elevated temperatures.

The irradiation process is desirably performed so that the composition is exposed to radiation for a sufficient time and at sufficient dose to cause an improvement in tensile properties without degradation effects. In this regard, the composition is subjected to ionizing radiation at a dose level of from 5 to 100 kGy, preferably at a dose level of from 10 to 80 kGy.

The thus obtained cross-linked products are useful in many applications, such as seals, gaskets, tubes, wire or cable jackets and insulation, and rollers which will be exposed to environments involving extreme temperatures, harsh chemicals and/or high pressure situations.

In a further embodiment, the present invention relates to a heat-shrinkable article comprising the cross-linked product according to the embodiment described above. The heat-shrinkable article may comprise additional components used in the preparation of heat-shrink materials. In preferred embodiments, the heat-shrinkable article is a tubular article prepared by forming a tubing by extruding the cross-linkable composition according to the first embodiment, cross-linking the same by ionizing irradiation, radially expanding the cross-linked tubular article under a heated condition and then rapidly cooling the same in order for it to maintain its expanded shape.

In another embodiment, the present invention relates to cable jackets or sealing elements comprising the cross-linked product described above. The shape of the sealing element is not particularly limited and may include O-ring, V-ring, and X-ring designs, for example. In addition, the seal element may comprise a multilayer composition, wherein the cross-linked product of the invention forms at least one layer of the multilayer configuration. While not being limited thereto, cable jackets according to the present invention may also comprise the cross-linked product in a multilayer configuration and/or in a composite (e.g., in composites comprising reinforcing fibers known in the art).

As indicated above, heat-shrinkable articles, cable jackets and sealing elements according to the present invention are particularly useful in equipment exposed to high temperatures and/or temperature changes, such as in aerospace engineering, for example.

In another embodiment, the present invention relates to a process of manufacturing a cross-linked product, comprising the steps of: (i) mixing an elastomeric fluoropolymer and a semi-crystalline fluoroplastic to prepare a crosslinkable composition; (ii) optionally subjecting the crosslinkable composition to a forming step; and (iii) subjecting the crosslinkable composition to ionizing radiation at a dose level of 5 to 100 kGy to obtain the cross-linked product, wherein the semi-crystalline fluoroplastic is a thermoplastic co-polymer grafted with anhydride functional groups and has a melting point in the range of from 240°C to 340°C.

Preferred embodiments of the mixture of an elastomeric fluoropolymer and a semi-crystalline fluoroplastic are explained in the context of the first embodiment above. The methods of preparing the blend of the elastomeric fluoropolymer and the semi-crystalline groups in step (i) are not particularly limited and may be suitably chosen by the skilled artisan depending on the compatibility of the polymers. For example, these may include dryblending, extrusion mixing and/or melt processing.

In the optional step (ii), the cross-linkable composition is subjected to a shaping process. Suitable methods include moulding methods (incl. injection moulding, transfer molding, rotational moulding, thermoforming and compression moulding, for example), extrusion moulding, casting and machining, for example.

Step (iii) comprises subjecting the crosslinkable composition to ionizing radiation to obtain the cross-linked product, as described above.

### EXAMPLES

In Examples 1 to 4, blends comprising different contents of the fluoroelastomer Aflas^{®} 150FC (commercially obtained from AGC Chemicals) and the semicrystalline fluoroplastic Fluon^{®} PFA EA-2000 (anhydride-functionalized semicrystalline thermoplastic copolymer commercially obtained from AGC Chemicals) have been prepared by twin screw extrusion mixing, using a LabTech co-rotating modular twin screw extruder with a a 5 kW drive motor (≤ 1200 rpm) and a screw diameter of 20 mm in a standard screw configuration. The heating zones of the twin screw extruder were set up according to Table 1.

**TABLE 1**

| Heating Zone1 (Feed) | Zone2 | Zone3 | Zone4 | Zone5 | Zone6 | Zone7 | Zone8 | Zone9 | Zone10 (Die) |
|---|---|---|---|---|---|---|---|---|---|
| 300°C | 305°C | 310°C | 320°C | 330°C | 330°C | 335°C | 340°C | 345°C | 345°C |

Upon mixing, the blends were subjected to tape extrusion, using a 32 mm Baughan Extruder equipped with an Inconel mixing screw (30 to 50 rpm) and the following heating zone setup:

**TABLE 2**

| Heating Zone1 (Feed) | Zone2 | Zone3 | Zone4 | Clamp | Head1 (Die) |
|---|---|---|---|---|---|
| 300°C | 320°C | 330°C | 340°C | 340°C | 340°C |

Subsequently, the thus produced tapes were electron beam irradiated at 20 kGy (2 Mrad) and 40 kGy (4 MRad) dosage levels, respectively.

The irradiated tapes and non-irradiated control samples were subjected to tensile strength (i.e. tensile strength at break) and ultimate elongation (i.e. elongation at break) tests according to ISO 37 (type 2 dumb bell test) at 23 ± 2°C, with an initial jaw separation of 50 mm and a jaw separation rate of 100 ± 10 mm per minute.

Where applicable, measurements have been repeated upon subjecting the samples to a heatshock at 315°C for 4 hours, and upon thermal aging for one week at 270°C prior. In addition, the low temperature flexibility of the irradiated samples has been tested by inspecting the samples for cracks upon exposure to a temperature of -75°C for 4 hours and subsequent bending. The sample compositions of Examples 1 to 4 and their evaluation are summarized in Table 3.

**TABLE 3**

| | | | Example 1 | Example 2 | Example 3 | Example 4 |
|---|---|---|---|---|---|---|
| Compositions | | Fluoroelastomer [wt.-%] | 40 | 50 | 60 | 70 |
| | | Semi-crystalline thermoplastic copolymer [wt.-%] | 60 | 50 | 40 | 30 |
| Unirradiated samples | Initial properties | Tensile Strength [MPa] | 15.19 | 11.83 | 5.87 | 0.53 |
| | | Ultimate Elongation [%] | 459 | 489 | 610 | 2100 |
| | After heatshock (315°C for 4 hours) | | Sample melted | Sample melted | Sample melted | Sample melted |
| After irradiation w. 20 kGy | Initial Properties | Tensile Strength [MPa] | 15.09 | 13.33 | 11.49 | 9.48 |
| | | Ultimate Elongation [%] | 483 | 520 | 607 | 827 |
| | After heatshock (315°C for 4 hours) | Tensile Strength [MPa] | 11.55 | 9.45 | 8.61 | 6.36 |
| | | Ultimate Elongation [%] | 482 | 582 | 803 | 1484 |
| | After heat aging (270°C for 168 hours) | Tensile Strength [MPa] | 15.44 | 13.51 | 11.01 | 9.08 |
| | | Ultimate Elongation [%] | 549 | 590 | 647 | 797 |
| | Flexibility after low temperature treatment (-75°C for 4 hours) | | No cracking | No cracking | No cracking | No cracking |
| After irradiation w. 40 kGy | Initial Properties | Tensile Strength [MPa] | 16.05 | 14.17 | 15.51 | 12.58 |
| | | Ultimate Elongation [%] | 471 | 473 | 540 | 522 |
| | After heatshock (315°C for 4 hours) | Tensile Strength [MPa] | 13.21 | 11.07 | 10.46 | 9.68 |
| | | Ultimate Elongation [%] | 518 | 607 | 745 | 897 |
| | After heat aging (270°C for 168 hours) | Tensile Strength [MPa] | 14.21 | 14 | 11.45 | 10.56 |
| | | Ultimate Elongation [%] | 558 | 627 | 672 | 696 |
| | Flexibility after low temperature treatment (-75°C for 4 hours) | | No cracking | No cracking | No cracking | No cracking |

As is shown in Table 3, the tensile strength and ultimate elongation of the unirradiated samples may be suitably adjusted by varying the contents of fluoroelastomer and the semi-crystalline fluoroplastic. While the non-crosslinked samples melt upon exposure to a temperature of 315°C, the irradiated samples maintain their tensile strength and ultimate elongation performance at excellent levels and withstand both heatshocks at 315°C and long-term heat exposure at 270°C. In addition, the irradiated samples are resistant to cracking at low temperatures (i.e. -75°C) and maintain their flexibility.

Accordingly, the above results show that the cross-linked products of the present invention enable manufacturing of toughened articles, which maintain favorable mechanical properties when exposed to extreme temperatures.

## Claims

1. A cross-linked product obtained by subjecting a cross-linkable composition comprising a blend of:
(a) an elastomeric fluoropolymer, and
(b) a semi-crystalline fluoroplastic,
to ionizing radiation at a dose level of from 5 to 100 kGy,
wherein the semi-crystalline fluoroplastic is a thermoplastic co-polymer grafted with anhydride functional groups, and
wherein the melting point of the semi-crystalline fluoroplastic is in the range of from 280°C to 340°C.

2. The cross-linked product according to claim 1, wherein the elastomeric fluoropolymer is partially fluorinated, and/or wherein the elastomeric fluoropolymer is a co-polymer of a fluoroalkylene and an alkylene, preferably a co-polymer of tetrafluoroethylene and propylene.

3. The cross-linked product according to any of claims 1 or 2, wherein the semi-crystalline fluoroplastic is a thermoplastic co-polymer comprising fluoroalkylene and a perfluoroether as co-monomers.

4. The cross-linked product according to claim 3, wherein the fluoroalkylene is tetrafluoroalkylene and/or the perfluoroether is a perfluoroalkoxy alkane.

5. The cross-linked product according to any of claims 1 to 4, wherein the melting point of the semi-crystalline fluoroplastic is in the range of from 290°C to 320°C.

6. The cross-linked product according to any of claims 1 to 5, wherein the density of the semi-crystalline fluoroplastic is between 1.5 to 3 g/ml, preferably between 1.9 and 2.4 g/ml.

7. The cross-linked product according to any of claims 1 to 6, wherein the content of elastomeric fluoropolymer is between 10 and 95 wt.-% based on the total weight of the composition, preferably between 15 and 90 wt.-%, and further preferably between 20 and 80 wt.-%; and/or wherein the content of semi-crystalline fluoroplastic is between 5 and 90 wt.-% based on the total weight of the composition, preferably between 10 and 85 wt.-%, and further preferably between 20 and 80 wt.-%.

8. The cross-linked product according to any of claims 1 to 7, wherein the weight ratio of elastic fluoropolymer to semi-crystalline fluoroplastic is between 10 : 1 and 1 : 10, preferably between 4 : 1 and 1:4, further preferably from 2.5 : 1 and 1 : 2.

9. The cross-linked product according to any of claims 1 to 8, wherein the composition further comprises a radiation crosslinking promoter in a content of up to 8 wt.-% based on the total weight of the composition.

10. The cross-linked product according to any of claims 1 to 9, obtained by subjecting the cross-linkable composition to ionizing radiation at a dose level of from 10 to 80 kGy.

11. Heat-shrinkable article comprising the cross-linked product according to any of claims 1 to 10.

12. Sealing element or cable jacket comprising the cross-linked product according to any of claims 1 to 10.

13. Process of manufacturing a cross-linked product, comprising the steps of:
(i) mixing an elastomeric fluoropolymer and a semi-crystalline fluoroplastic to prepare a crosslinkable composition;
(ii) optionally subjecting the crosslinkable composition to a forming step; and
(iii) subjecting the crosslinkable composition to ionizing radiation at a dose level of from 5 to 100 kGy to obtain the cross-linked product,
wherein the semi-crystalline fluoroplastic is a thermoplastic co-polymer grafted with anhydride functional groups, and
wherein the melting point of the semi-crystalline fluoroplastic is in the range of from 280°C to 340°C.

## Patentansprüche

1. Vernetztes Produkt, erhalten durch Aussetzen einer vernetzbaren Zusammensetzung, umfassend eine Mischung aus
(a) einem elastomeren Fluorpolymer und
(b) einem teilkristallinen Fluorkunststoff,
gegenüber ionisierender Strahlung mit einer Dosis von 5 bis 100 kGy,
wobei der teilkristalline Fluorkunststoff ein thermoplastisches Copolymer ist, das mit Anhydrid-Funktionsgruppen gepfropft ist, und
wobei der Schmelzpunkt des teilkristallinen Fluorkunststoffs im Bereich von 280°C bis 340°C liegt.

2. Vernetztes Produkt nach Anspruch 1, wobei das elastomere Fluorpolymer ein teilfluoriertes und/oder vollständig fluoriertes elastomeres Fluorpolymer ist, das ein Copolymer aus einem Fluoralkylen und einem Alkylen, vorzugsweise ein Copolymer aus Tetrafluorethylen und Propylen, ist.

3. Vernetztes Produkt nach einem der Ansprüche 1 oder 2, wobei der teilkristalline Fluorkunststoff ein thermoplastisches Copolymer ist, das Fluoralkylen und einen Perfluorether als Comonomere umfasst.

4. Vernetztes Produkt nach Anspruch 3, wobei das Fluoralkylen Tetrafluorethylen und/oder der Perfluorether ein Perfluoralkoxyalkan ist.

5. Vernetztes Produkt nach einem der Ansprüche 1 bis 4, wobei der Schmelzpunkt des teilkristallinen Fluorkunststoffs im Bereich von 290°C bis 320°C liegt.

6. Vernetztes Produkt nach einem der Ansprüche 1 bis 5, wobei die Dichte des teilkristallinen Fluorkunststoffs zwischen 1,5 und 3 g/ml, vorzugsweise zwischen 1,9 und 2,4 g/ml, liegt.

7. Vernetztes Produkt nach einem der Ansprüche 1 bis 6, wobei der Gehalt des elastomeren Fluorpolymers zwischen 10 und 95 Gew.-%, bezogen auf das Gesamtgewicht der Zusammensetzung, vorzugsweise zwischen 15 und 90 Gew.-% und ferner vorzugsweise zwischen 20 und 80 Gew.-%, liegt; und/oder wobei der Gehalt des teilkristallinen Fluorkunststoffs zwischen 5 und 90 Gew.-%, bezogen auf das Gesamtgewicht der Zusammensetzung, vorzugsweise zwischen 10 und 85 Gew.-% und ferner vorzugsweise zwischen 20 und 80 Gew.-%, liegt.

8. Vernetztes Produkt nach einem der Ansprüche 1 bis 7, wobei das Gewichtsverhältnis von elastomerem Fluorpolymer zu teilkristallinem Fluorkunststoff zwischen 10:1 und 1:10, vorzugsweise zwischen 4:1 und 1:4, ferner vorzugsweise zwischen 2,5:1 und 1:2, liegt.

9. Vernetztes Produkt nach einem der Ansprüche 1 bis 8, wobei die Zusammensetzung ferner einen Strahlungsvernetzungsförderer in einem Gehalt von bis zu 8 Gew.-%, bezogen auf das Gesamtgewicht der Zusammensetzung, umfasst.

10. Vernetztes Produkt nach einem der Ansprüche 1 bis 9, erhalten durch Aussetzen der vernetzbaren Zusammensetzung gegenüber ionisierender Strahlung mit einer Dosis von 10 bis 80 kGy.

11. Wärmeschrumpfbarer Gegenstand, umfassend das vernetzte Produkt nach einem der Ansprüche 1 bis 10.

12. Dichtungselement oder Kabelmantel, umfassend das vernetzte Produkt nach einem der Ansprüche 1 bis 10.

13. Verfahren zur Herstellung eines vernetzten Produkts, umfassend die Schritte:
(i) Mischen eines elastomeren Fluorpolymers und eines teilkristallinen Fluorkunststoffs, um eine vernetzbare Zusammensetzung herzustellen;
(ii) gegebenenfalls Aussetzen der vernetzbaren Zusammensetzung einem Formgebungsschritt; und
(iii) Aussetzen der vernetzbaren Zusammensetzung gegenüber ionisierender Strahlung mit einer Dosis von 5 bis 100 kGy, um das vernetzte Produkt zu erhalten,
wobei der teilkristalline Fluorkunststoff ein thermoplastisches Copolymer ist, das mit Anhydrid-Funktionsgruppen gepfropft ist, und
wobei der Schmelzpunkt des teilkristallinen Fluorkunststoffs im Bereich von 280°C bis 340°C liegt.

## Revendications

1. Produit réticulé obtenu par soumission d'une composition réticulable comprenant un mélange
(a) d'un fluoropolymère élastomère, et
(b) d'un fluoroplastique semi-cristallin,
à un rayonnement ionisant à une dose de 5 à 100 kGy,
dans lequel le fluoroplastique semi-cristallin est un copolymère thermoplastique greffé avec des groupes fonctionnels anhydride, et
dans lequel le point de fusion du fluoroplastique semi-cristallin est compris dans la plage de 280°C à 340°C.

2. Produit réticulé selon la revendication 1, dans lequel le fluoropolymère élastomère est un fluoropolymère élastomère partiellement fluoré et/ou entièrement fluoré qui est un copolymère d'un fluoroalkylène et d'un alkylène, de préférence un copolymère de tétrafluoroéthylène et de propylène.

3. Produit réticulé selon l'une quelconque des revendications 1 ou 2, dans lequel le fluoroplastique semi-cristallin est un copolymère thermoplastique comprenant un fluoroalkylène et un perfluoroéther en tant que comonomères.

4. Produit réticulé selon la revendication 3, dans lequel le fluoroalkylène est le tétrafluoroéthylène et/ou le perfluoroéther est un perfluoroalkoxyalcane.

5. Produit réticulé selon l'une quelconque des revendications 1 à 4, dans lequel le point de fusion du fluoroplastique semi-cristallin est compris dans la plage de 290°C à 320°C.

6. Produit réticulé selon l'une quelconque des revendications 1 à 5, dans lequel la masse volumique du fluoroplastique semi-cristallin est comprise entre 1,5 et 3 g/ml, de préférence entre 1,9 et 2,4 g/ml.

7. Produit réticulé selon l'une quelconque des revendications 1 à 6, dans lequel la teneur en fluoropolymère élastomère est comprise entre 10 et 95 % en poids, sur la base du poids total de la composition, de préférence entre 15 et 90 % en poids, et plus préférablement entre 20 et 80 % en poids ; et/ou dans lequel la teneur en fluoroplastique semi-cristallin est comprise entre 5 et 90 % en poids, sur la base du poids total de la composition, de préférence entre 10 et 85 % en poids, et plus préférablement entre 20 et 80 % en poids.

8. Produit réticulé selon l'une quelconque des revendications 1 à 7, dans lequel le rapport pondéral du fluoropolymère élastique au fluoroplastique semi-cristallin est compris entre 10:1 et 1:10, de préférence entre 4:1 et 1:4, plus préférablement entre 2,5:1 et 1:2.

9. Produit réticulé selon l'une quelconque des revendications 1 à 8, dans lequel la composition comprend en outre un promoteur de réticulation par rayonnement en une teneur allant jusqu'à 8 % en poids sur la base du poids total de la composition.

10. Produit réticulé selon l'une quelconque des revendications 1 à 9, obtenu par soumission de la composition réticulable à un rayonnement ionisant à une dose de 10 à 80 kGy.

11. Article thermorétractable comprenant le produit réticulé selon l'une quelconque des revendications 1 à 10.

12. Élément d'étanchéité ou gaine de câble comprenant le produit réticulé selon l'une quelconque des revendications 1 à 10.

13. Procédé de fabrication d'un produit réticulé, comprenant les étapes consistant à :
(i) mélanger un fluoropolymère élastomère et un fluoroplastique semi-cristallin pour préparer une composition réticulable ;
(ii) éventuellement soumettre la composition réticulable à une étape de mise en forme ; et
(iii) soumettre la composition réticulable à un rayonnement ionisant à une dose de 5 à 100 kGy pour obtenir le produit réticulé,
dans lequel le fluoroplastique semi-cristallin est un copolymère thermoplastique greffé avec des groupes fonctionnels anhydride, et
dans lequel le point de fusion du fluoroplastique semi-cristallin est compris dans la plage de 280°C à 340°C.
